# EUROPEAN PATENT SPECIFICATION

(11) **EP 3 132 991 B1**
(45) Date of publication and mention of the grant of the patent: **03.04.2019**
(21) Application number: 14889345.6
(22) Date of filing: 14.04.2014
(51) Int. Cl.: B62B 5/00, A61H 3/04, B62B 5/04, B60B 33/00, B60B 33/04, B60B 33/02, B60R 19/00, B60R 19/14, B60R 19/16, A61H 3/00

(54) **TRANSPORT TROLLEY AND WALKER**
TRANSPORTTROLLEY UND GEHILFE
CHARIOT DE TRANSPORT ET DÉAMBULATEUR

(43) Date of publication of application: 22.02.2017
(73) Proprietor: FUJI Corporation, Chiryu Aichi (JP)
(72) Inventor: ISOZUMI, Joji, Chiryu Aichi (JP); NOMURA, Hideaki, Chiryu Aichi (JP)
(74) Representative: Grünecker Patent- und Rechtsanwälte PartG mbB
(86) International application number: PCT/JP2014/060623
(87) International publication number: WO 2015/159347

(56) References cited:
- WO-A1-02/04236
- WO-A1-02/062285
- GB-A- 569 860
- JP-A- H1 178 903
- JP-A- 2004 306 710
- US-A- 4 941 496
- US-A- 5 435 404
- US-A1- 2009 301 533

## Description

### Technical Field

The present invention relates to a transport trolley for moving a person or object, and a walker provided with the transport trolley.

### Background Art

Transport trolleys are configured to be able to travel using multiple wheels, and are used for moving a person or object. Transport trolleys, in addition to being used to transport goods loaded on a platform, are used as a base platform of walkers that assist a user to move, as disclosed in patent literature 1 for example. For this type of transport trolley, in order to prevent goods from falling, or to prevent the walker from tipping over, restrictions are required with regard to excessive inclines.

With the walker of JP-A-2005 137410, as shown in fig. 2, a stopper member (rod) that restricts the inclination of the walker is provided. With this type of configuration, in a case where the walker is inclined to a certain extent, the tip section of the rod contacts the floor surface, thus preventing the walker from tipping over. Also, the inclination angle of the walker when the rod contacts the ground is set in advance based on the positional relationship of the wheels and the rod with respect to the main body.

A transport trolley having the features as set forth in the preamble of claim 1 is known from US 2009/0301533.

### Summary of Invention

### Technical Problem

For such a transport trolley, from the point of view of preventing tipping over, it is desirable that the inclination angle when the stopper member contacts the ground is small. To this end, a configuration in which the stopper member is provided at a position close to the floor surface can be considered, such that the stopper member contacts the floor as soon as possible after the transport trolley starts to tip. However, with such a configuration, the stopper member is more likely to collide with obstacles on the floor. If the stopper member collides with an obstacle, movement of the transport trolley may be obstructed.

The present invention takes account of such circumstances and an object thereof is to provide a transport trolley and a walker that make an inclination angle of the transport trolley small while preventing a stopper member from colliding with an obstacle.

### Solution to Problem

The transport trolley according to claim 1 includes: a traveling trolley main body provided with multiple wheels; a stopper member that restricts inclination of the trolley main body by contacting a floor surface in a case in which the trolley main body is inclined to the side in the travel direction, the stopper member being provided at either a side to the front or a side to the rear of the wheels in the travel direction so as to be rotatable with respect to the trolley main body around a rotation axis line that is horizontal; and an elastic member that applies elastic force such that the stopper member returns to an initial angle, wherein the stopper member, when contacting an obstacle from the front side or the rear side in the travel direction, rotates around the rotation axis line against elastic force due to the load in the travel direction received from the obstacle so as to avoid the obstacle.

### Advantageous Effects of Invention

According to such a configuration, the transport trolley restricts inclination of the trolley main body using the stopper member. Thus, the transport trolley is prevented from tipping over and so on.

### Brief Description of Drawings

Fig. 1 shows an embodiment of a movement assisting device and a user from the right side with respect to the travel direction.
Fig. 2 is a schematic drawing showing the configuration of a tipping over prevention device.
Fig. 3 shows the tipping over prevention device restricting inclination of the trolley main body.
Fig. 4 shows the tipping over prevention device avoiding an obstacle.
Fig. 5 shows the tipping over prevention device restricting inclination of the trolley main body while avoiding an obstacle.
Fig. 6 is a drawing for comparing the stopper member in a locked state and the stopper member rotated to a maximum angle.
Fig. 7 is a schematic drawing showing the configuration of an alternative embodiment of the tipping over prevention device.

### Description of Embodiments

Hereinafter, an embodiment of the present invention of a transport trolley and walker is described with reference to the drawings. In the embodiment, the transport trolley is used as a base platform of a walker that assists a user to move. Specifically, the walker is a care robot, configured to move independently using a drive motor, that assists movement of a user such as standing up, sitting down, and walking by supporting a body part (for example, the upper body) of the user.

### Embodiment

### Overall configuration of movement assisting device 1

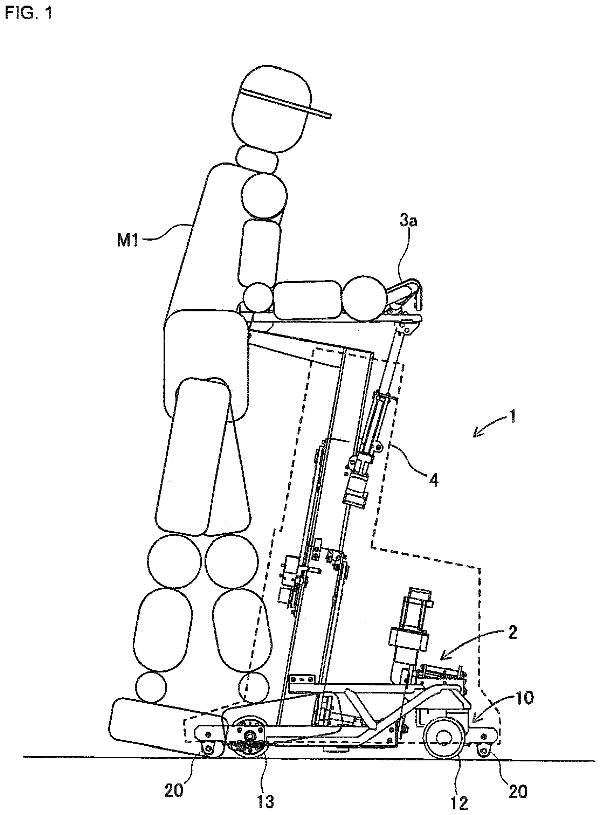

As shown in fig. 1, movement assisting device 1 is provided with transport trolley 2, holding section 3, and cover member 4. Transport trolley 2 is configured to travel using multiple wheels. As shown in fig. 1, holding section 3 is used by standing user M1 to maintain a posture. Holding section 3 is fixed to transport trolley 2. Pair of handles 3a is provided on a front end on the upper surface of holding section 3. Pair of handles 3a are to be gripped by the left and right hands of user M1.

Cover member 4 is formed in a U-shape that opens to the rear side (the left direction in fig. 1) in the travel direction of movement assisting device 1 when looking from above. Cover member 4 is attached to transport trolley 2 and holding section 3. Cover member 4 covers a front section and a rear section of transport trolley 2 and holding section 3.

Transport trolley 2 is provided with trolley main body 10 and multiple tipping over prevention devices 20. Trolley main body 10 is provided with frame 11, pair of front wheels 12 arranged in the width direction of the vehicle (the front-rear direction in fig. 1), and pair of rear wheels 13 arranged in a similar manner to front wheels 12. Frame 11 is formed in a U-shape that opens to the rear side in the travel direction of movement assisting device 1 when looking from above. The width of the opening of frame 11 is set as a width that allows user M1 to enter.

Pair of front wheels 12 are each provided at the front side of frame 11. Pair of rear wheels 13 are each provided at the rear side of frame 11. Rear wheels 13 are drive wheels connected to a drive motor, which is not shown. Front wheels 12 are driven wheels configured to be rotatable based on the movement of transport trolley 2.

Multiple tipping over prevention devices 20 control the inclination of movement assisting device 1 when movement assisting device 1 inclines with respect to the floor surface, and are thus inclination restricting devices that prevent movement assisting device 1 from tipping over. In this embodiment, tipping over prevention devices 20 are arranged further to the front side in the travel direction than front wheels 12 of the multiple wheels, and further to the rear side in the travel direction than rear wheels 13 of the multiple wheels. That is, tipping over prevention devices are arranged in four locations corresponding to the pair of front wheels 12 and the pair of rear wheels 13.

### Configuration of tipping over prevention device 20

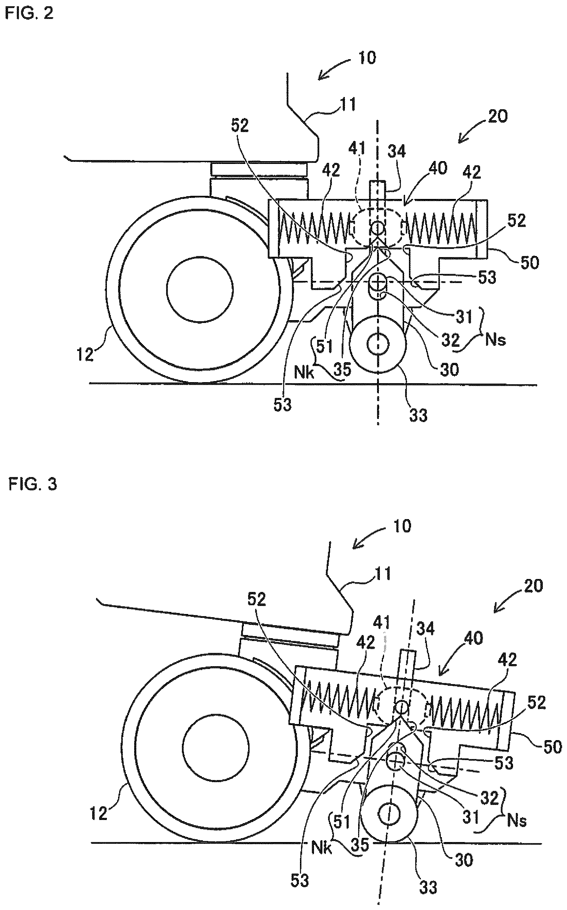

The configuration of tipping over prevention device 20 will be described with reference to fig. 2. As shown in fig. 2, tipping over prevention device 20 includes stopper member 30, support mechanism 40, and bracket 50. Stopper member 30 is provided either a side to the front or a side to the rear of the wheels in the travel direction so as to be rotatable with respect to trolley main body 10 around a rotation axis line that is horizontal. Stopper member 30 restricts inclination of trolley main body 10 by contacting the floor surface when trolley main body inclines in the travel direction.

That is, stopper member 30, when the wheels in question are front wheels 12, is provided further to the front side in the travel direction than front wheels 12, and restricts inclination to the front side in the travel direction of trolley main body 10. Also, stopper member 30, when the wheels in question are rear wheels 13, is provided further to the rear side in the travel direction than rear wheels 13, and restricts inclination to the rear side in the travel direction of trolley main body 10. Stopper member 30 includes shaft member 31, elongated hole 32, assisting wheel 33, pillar 34, and engaging protrusion 35. Below, the "travel direction" of trolley main body 10 is also referred to as the "front-rear direction".

Shaft member 31 of stopper member 30 is perpendicular to the front-rear direction and vertical direction of trolley main body 10, and is fixed to frame 11 extending in a horizontal direction. Shaft member 31 goes through elongated hole 32 formed in the main body section of stopper member 30. Elongated hole 32 is formed so as to extend in the vertical direction when stopper member 30 is in an initial state (in a state in which the extension direction of the main body section matches the vertical direction). Stopper member 30 is prevented from being removed by the flange member (not shown) provided at an end of shaft member 31 that goes through elongated hole 32.

Due to the relationship of the above shaft member 31 and elongated hole 32, stopper member 30 is rotatable with respect to trolley main body 10 around a rotation axis line that is horizontal and is movable in the extension direction of elongated hole 32. Assisting wheel 33 of stopper member 30 is supported on a lower end of stopper member 30 so as to be rotatable around a rotation axis line that is horizontal. Assisting wheel 33 is arranged such that a specified gap (first distance L1) from the floor opens when stopper member 30 is in the initial state. By this, assisting wheel 33 contacts the floor surface when trolley main body 10 inclines. Also, assisting wheel 33 is rotatable due to the friction that occurs between assisting wheel 33 and the floor surface when assisting wheel 33 contacts the ground.

Pillar 34 of stopper member 30 is formed on a part positioned at an upper end when in the initial position. Pillar 34 has a circular or polygon cross section in the horizontal direction. Pillar 34 is a part that is slidably supported via supporting main body section 41 of support mechanism 40 described later.

Engaging protrusion 35 of stopper member 35 is formed on a part positioned further up than shaft member 31 in the initial state. In the present embodiment, engaging protrusion 35 is configured from a pair of inclined surfaces formed as planes inclined with respect to the vertical direction. The pair of inclined surfaces of engaging protrusion 35 are set to intersect each other. Engaging protrusion 35 is a part that engages with engaging recess 51 of bracket 50 described later.

Support mechanism 40 includes support main body 41, and pair of coil springs 42. Support main body 41 has an overall cylindrical shape. Support main body 41 is arranged so as to be rotatable around a rotation axis, and slidable in a front-rear direction with respect to frame 11. Support main body 41 supports pillar 34 of stopper member 34 with pillar 34 going through the inside of stopper member 30.

Pair of coil springs 42 are connected on both sides in the front and rear directions of support main body 41. Coil springs 42 are an elastic member that applies an elastic force that returns stopper member 30 to its initial state. Specifically, the initial angle of stopper member 30 is an angle at which the lengthwise direction of stopper member 30 matches the vertical direction. Stopper main body 41 is biased by coil springs 42 so as to be positioned above shaft member 31 of stopper member 30 in the front-rear direction of trolley main body 10. By this, stopper member 30 is maintained at the initial angle due to the positional relationship between shaft member 31 and support man body 41.

As shown in fig. 2, bracket 50 is formed overall as a block with a recess that opens downwards. Bracket 50 is fixed to trolley main body 10. Bracket 50 includes engaging recess 51, assisting engaging recesses 52, and rotation restricting sections 53. Engaging recess 51 has a shape that corresponds to the external shape of engaging protrusion 35 of stopper member 30 such that engaging protrusion 35 and engaging recess 51 are engagable with each other.

Here, in a state with stopper member 30 moved to its lowest position with respect to trolley main body 10, that is with stopper member 30 at its initial angle and with shaft member 31 positioned at the top end of elongated hole 32, engaging recess 51 of bracket 50 is arranged such that a specified gap (second distance L2) opens with respect to engaging protrusion 35. Then, when stopper member 30 is moved up with respect to trolley main body 10 by, for example, a load in the upwards direction being received from the floor surface, engaging protrusion 35 of stopper member 30 engages in the rotation direction. By this, stopper member 30 becomes locked in a state in which rotation around the rotation axis line is restricted.

Assisting engaging recesses 52 of bracket 50 are formed on both sides in the front and rear directions of engaging recess 51. The pair of assisting recesses 52 have a shape that corresponds to the external shape of engaging protrusion 35 of stopper member 30 such that engaging protrusion 35 and assisting recesses 52 are engagable with each other when stopper member 30 is moved up in a state rotated around the rotation axis line.

Rotation restricting sections 53 of bracket 50 are formed at the lower end of bracket 50 provided on trolley main body 10 so as to be in contact with stopper member 30 in the rotation direction when stopper member 30 is rotated around the rotation axis line to the specified angle. Rotation restricting section 53 contacts stopper member 30, meaning that stopper member 30 is restricted from rotating further in the same direction. By this, the angle range in which stopper member 30 is rotatable is restricted by rotation restricting sections 53.

### Operation of tipping over prevention device 20

Operation of tipping over prevention device 20 will be described with reference to figs. 2 to 6. Note that, described in the descriptions below is a tipping over prevention device 20 provided further to the front side in the travel direction that front wheels 12. Tipping over prevention device 20 supports stopper member 30 so as to be rotatable around the rotation axis line and relatively movable in the vertical direction with respect to trolley main body 10 by shaft member 31 going through elongated hole 32. That is, in the present embodiment, slide mechanism Ns of stopper member 30 is configured from elongated hole 32 and shaft member 31 of stopper member 30.

Also, tipping over prevention device 20 restricts the rotation of stopper member 30 around the rotation axis line by engaging protrusion 35 of stopper member 30 engaging with engaging recess 51 of bracket 50. That is, in the present embodiment, lock mechanism Nk of stopper member 30 is configured from engaging protrusion 35 and engaging recess 51.

Each member of tipping over prevention device 20, in the initial state, has a positional relationship as shown in fig. 2. Specifically, stopper member 30 is maintained at the initial angle by support mechanism 40. Here, assisting wheel 33 of stopper member 30 is separated from the floor surface by specified first distance L1. Also, engaging protrusion 35 of stopper member 30 faces engaging recess 51 of bracket 50 and is separated from engaging recess 51 by specified second distance L2.

Let us assume that from this initial state movement assisting device 1 inclines to the front side in the travel direction while moving. When this occurs, trolley main body 10 inclines such that tipping over prevention device 20 approaches the floor surface. When tipping over prevention device 20 has lowered by approximately first distance L1, the lower end of assisting wheel 33 of stopper member 30 contacts the floor surface. Then, if trolley main body 10 inclines further, stopper member 30 receives a load in the upwards direction from the floor surface.

By this, pillar 34 slides with respect to support main body 41 and stopper member 30 is moved relatively upwards with respect to trolley main body 10. Then, when trolley main body 10 is moved down by second distance L2 after stopper member 30 has contacted the ground, as shown in fig. 3, engaging protrusion 35 of stopper member 30 engages with engaging recess 51 of bracket 50. By this, stopper member 30 becomes locked in a state in which rotation around the rotation axis line is restricted.

In this way, when stopper member 30 contacts the floor surface, the inclination of trolley main body 10 is restricted due to stopper member receiving force from the floor surface. Thus, even if movement assisting device 1 is inclined to the front side in the travel direction, tipping over of movement assisting device 1 is prevented by stopper member 30. Then, if movement assisting device 1 is returned to its original posture, stopper member 30 moves down under its own weight. By this, the engagement of engaging protrusion 35 and engaging recess 51 is released, and stopper member 30 returns to its original state.

Next, let us assume that, from the initial state shown in fig. 2, movement assisting device 1 contacts obstacle Bs from either the front side or the rear side in the travel direction while moving. When this occurs, stopper member 30 receives a load from obstacle Bs in the travel direction, that is receives a load in the horizontal direction. Due to this load, stopper member 30 rotates around the rotation axis line against the elastic force applied by coil springs 42 of support mechanism 40.

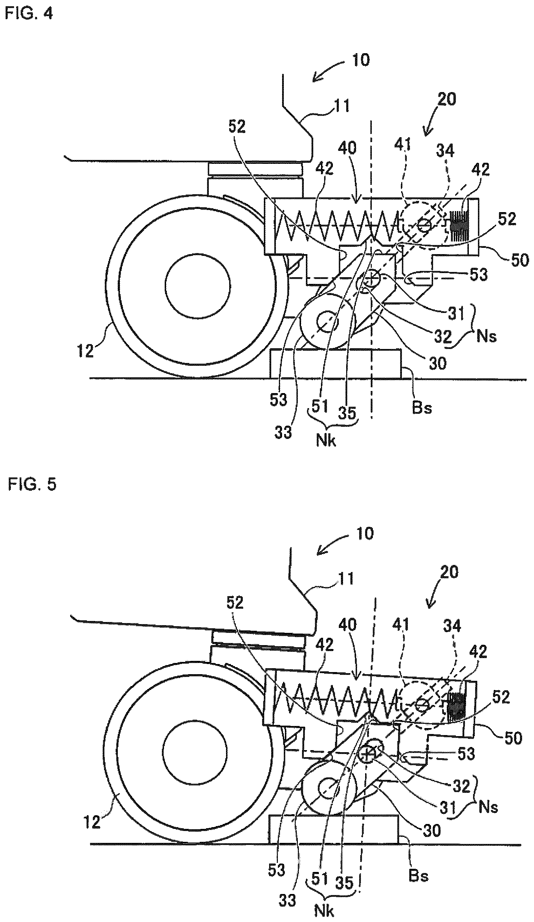

Then, when the lower end of assisting wheel 33 of stopper member 30 moves down to the upper part of obstacle Bs, as shown in fig. 4, stopper member 30 rests on top of obstacle Bs. Thus, stopper member 30 rotates due to the horizontal load, thereby avoiding obstacle Bs. Also, here, assisting wheel 33 rotates when contacting the upper part of obstacle Bs. By this, when tipping over prevention device 20 avoids obstacle Bs, the load is reduced due to the contact with obstacle Bs.

Next, when tipping over prevention device 20 has passed over obstacle Bs, stopper member 30 rotates in the reverse direction back to the original angle due to the elastic force applied by support mechanism 40. By this, stopper member 30 returns to its original state. On the other hand, let us assume that, when stopper member 30 is avoiding obstacle Bs, movement assisting device 1 inclines to the front side in the travel direction. When this occurs, assisting wheel 33 is already in a state contacting obstacle Bs, so stopper member 30 receives an upwards load from obstacle Bs.

By this, stopper member 30 rotates to the specified angle at which stopper member 30 contacts rotation restricting section 53 of bracket 50. Stopper member 30, after being restricted in its rotation angle, moves relatively up with respect to trolley main body 10. Then, as shown in fig. 5, with stopper member 30 in a state contacting rotation restricting section 53, engaging protrusion 35 engages in a rotation direction with assisting engaging protrusion 52 of bracket 50. By this, stopper member 30 becomes locked in a state in which rotation around the rotation axis line is restricted.

In this way, when stopper member 30 contacts the upper part of obstacle Bs, the inclination of trolley main body 10 is restricted due to stopper member 30 receiving force from obstacle Bs. Thus, even if movement assisting device 1 inclines to the front side in the travel direction while stopper member 30 is avoiding obstacle Bs, tipping over of movement assisting device 1 is prevented by stopper member 30. Next, when movement assisting device 1 has returned to its original posture and tipping over prevention device has passed over obstacle Bs, stopper member 30 returns to it original state under its own weight and due to the elastic force applied by support mechanism 40.

Here, if the stopper member is fixedly connected so as to be integrated with the trolley main body, the distance between the stopper member and the floor surface needs to be set considering items such as the allowed inclination angle of movement assisting device 1 and the height Hb of obstacle Bs that needs to be avoided. In contrast, with tipping over prevention device 20 of the present embodiment, stopper member 30, which restricts inclination of trolley main body 10 when contacting the floor surface, is movably provided on trolley main body 10 so as to be rotatable around the rotation axis line.

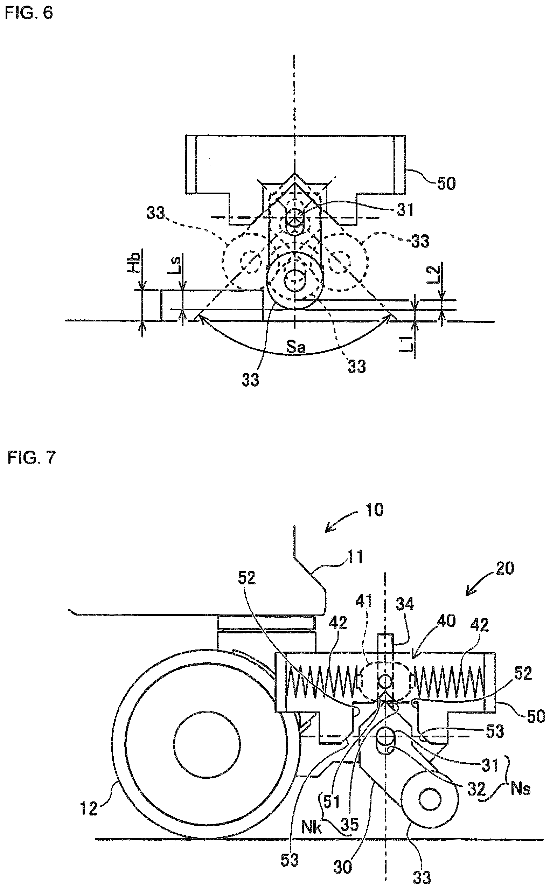

Due to this, with tipping over prevention device 20, in a case when set to be able to avoid obstacle Bs of height Hb in the same way as with the fixed type above for a specified angle range Sa, as shown in fig. 6, stopper member 30 is arranged closer to the floor surface by shift distance Ls compared to the fixed type. Here, shift distance Ls is equal to height Hb of obstacle Bs minus the sum of first distance L1 (the distance separating stopper member 30 and the floor surface in the initial state) and second distance L2 (the distance separating engaging protrusion 35 and engaging recess 51 in the initial state) (Ls = Hb - [L1 + L2]).

Thus, with tipping over prevention device 20 of the present embodiment, when movement assisting device 1 inclines, stopper member 30 contacts the floor surface sooner than contact occurs with the fixed type by an amount corresponding to shift distance Ls. In other words, tipping over prevention device 20, while being able to avoid obstacles Bs with the same height Hb as a fixed type, makes use of stopper member 30 at a smaller inclination angle than the fixed type.

### Effects according to the configuration of the embodiment

Transport trolley 2 of the present embodiment is provided with traveling trolley main body 10 provided with multiple wheels (front wheels 12 and rear wheels 13), stopper member 30, provided at either a side to the front or a side to the rear of the wheels (front wheels 12 and rear wheels 13) in the travel direction so as to be rotatable with respect to trolley main body 10 around a rotation axis line that is horizontal, that restricts inclination of trolley main body 10 by contacting the floor surface in a case in which trolley main body 10 is inclined to the side in the travel direction, and an elastic member (coil springs 42) that applies elastic force such that stopper member 30 returns to its initial angle. Stopper member 30, when contacting obstacle Bs from the front side or rear side in the travel direction, avoids obstacle Bs by rotating around the rotation axis line against the elastic force due to load received from obstacle Bs in the travel direction.

According to such a configuration, transport trolley 2 restricts inclination of trolley main body 10 using stopper member 10. Thus, transport trolley 2 is prevented from tipping over and so on. Also, stopper member 30 is provided so as to be rotatable around an rotation axis line that is in a horizontal direction. This prevents stopper member 30 and obstacle Bs from colliding with each other, and enables stopper member 30 to be positioned closer to the floor surface. Thus, the inclination angle of transport trolley 2 with stopper member 30 contacting the ground becomes smaller, thus improving the traveling ability of transport trolley 2.

Also, transport trolley 2 is further provided with slide mechanism Ns that supports stopper member 30 so as to be rotatable around the rotation axis line and relatively movable in a vertical direction with respect to trolley main body 10, and lock mechanism Nk that, in a case in which trolley main body 10 inclines such that stopper member 30 contacts the floor surface, engages in the rotation direction with stopper member 30 that has moved up relative to trolley main body 10 due to upwards load received from the floor surface, thus restricting rotation of stopper member 30.

According to such a configuration, in a case in which transport trolley 2 inclines and contacts the floor surface, rotation of stopper member 30 is restricted at a position moved relatively up with respect to transport trolley 2. Thus, stopper member 30 becomes in a state fixed as one with trolley main body 10, and the inclining of transport trolley 2 is restricted reliably. Also, in a case in which transport trolley 2 inclines when stopper member 30 is avoiding obstacle Bs, in a similar manner, stopper member 30 becomes fixed to trolley main body 10, and inclination of transport trolley 2 is restricted.

Also, transport trolley 2 is further provided with rotation restricting section 53, which is provided on trolley main body 10, and that restricts the angle range in which stopper member 30 is able to be rotated by contacting in the rotation direction stopper member 30 that has rotated around the rotation axis line to the specified angle.

According to such a configuration, the rotation of stopper member 30 around the rotation axis line is restricted in a case when stopper member 30 has rotated the maximum angle within rotatable angle range Sa. By this, stopper member 30 becomes fixed as one to trolley main body 10. Thus, even in a case in which transport trolley 2 is inclined when stopper member 30 is avoiding obstacle Bs, inclination of transport trolley 2 is reliably restricted by stopper member 30.

Also, stopper member 30 includes assisting wheel 33 that contacts the floor surface when trolley main body 10 inclines. According to such a configuration, when stopper member 30 is avoiding obstacle Bs, assisting wheel 33 contacts obstacle Bs. By this, when stopper member 30 contacts obstacle Bs, the rotation of stopper member 30 progresses, such that stopper member 30 reliably avoids obstacle Bs. Also, the resistance due to the contact between stopper member 30 and obstacle Bs becomes smaller, thus improving the traveling ability of transport trolley 2.

Also, transport trolley 2 is provided with multiple inclination restricting devices (tipping over prevention devices 20) configured from stopper member 30 and an elastic member (coil springs 42). The multiple inclination restricting devices (tipping over prevention devices 20) are arranged further to the front side in the travel direction than the front wheels of the multiple wheels (front wheels 12 and rear wheels 13), and further to the rear side in the travel direction than the rear wheels of the multiple wheels (front wheels 12 and rear wheels 13).

According to such as configuration, regardless of whether transport trolley is progressing forwards or backwards, inclining the front and inclining to the rear of transport trolley 2 is restricted. By this, movement assisting device 1 provided with transport trolley 2 is prevented from tipping over, and the traveling ability of movement assisting device 1 is improved.

The walker (movement assisting device 1) is provided with transport trolley 2 and holding section 3, provided on trolley main body 10, that is used by a standing user for maintaining posture. According to such a configuration, the overall center of gravity of movement assisting device 1 including user M1 becomes higher. Therefore, the load in the inclining direction on transport trolley becomes larger. Thus, applying the present invention to movement assisting device 1 in this manner is especially beneficial in that tipping over of movement assisting device 1 is prevented even more reliably.

### Alternative embodiments

In the first embodiment, slide mechanism Ns is configured from elongated hole 32 and shaft member 31 of stopper member 30. Various other configurations for slide mechanism Ns may be considered. For example, a shaft member may be arranged on stopper member 30 fixed or via a bearing, with the shaft member being supported by trolley main body 10 so as to be movable in the vertical direction.

Also, lock mechanism Nk is configured from engaging protrusion 35, engaging recess 51, and assisting engaging recesses 52. The angle of the tip of engaging protrusion 35 may be set appropriately based on, for example, angle range Sa through which stopper member 30 is rotatable. Also, in the first embodiment, a single tip of engaging protrusion 35 engages with engaging recess 51. However, lock mechanism Nk may be configured from an outer gear provided on stopper member 30, and an inner gear provided on trolley main body 10 that meshes with the outer gear.

In the first embodiment, stopper member 30 includes assisting wheel 33 that contacts the floor surface when trolley main body 10 inclines. However, instead of using assisting wheel 33, stopper member 30 may be configured such that a ground contacting member is appropriately arranged on an end of stopper member 30 at the floor surface side. As this ground contacting member, stopper member 30 may be provided with, for example, a rubber member that stops trolley main body 10 from slipping on the floor surface upon contacting the floor surface, or a cap member that protects the tip of stopper member 30.

Also, stopper member 30, when trolley main body 10 inclines, may contact the floor surface further to one side in the travel direction than the rotation axis (corresponding to the rotation center of stopper member 30). That is, in a case in which tipping over prevention device 20 is provided further to the front side than the front wheels in the travel direction, stopper member 30, for example as shown in fig. 7, may be bent to the front further than shaft member 31 in the front-rear direction.

With such a configuration, stopper member 30 contacts the ground further to the front in the travel direction with respect to trolley main body 10 inclined forwards in the travel direction, thereby improving the ability of the construction to bear load. Also, in a case in which tipping over prevention device 20 includes rotation restricting device 53 as in the first embodiment, stopper member 30 rotates in the direction in which rotation is restricted by rotation restricting device 53, thus inclination of transport trolley 2 is restricted even more reliably.

Also, in the first embodiment, transport trolley 2 is used as a base of a walker (movement assisting device 1). However, in addition to being used as a base of a wheeled walker that does not include a drive motor, transport trolley 2 may be applied to a hand-pushed trolley that includes a platform on which goods can be loaded. The same effects are achieved with this embodiment as with the first embodiment.

Further, stopper member 30 is provided further to the front side or further to the rear side in the travel direction than the wheels, and restricts inclination of trolley main body 10 to one side in the travel direction. However, transport trolley 2 may have a configuration in which stopper member 30 configured in such a way is arranged at appropriate locations on frame 11. Thus, movement assisting device 1 is prevented from tipping over in the travel direction (a direction perpendicular to the travel direction).

### Reference Signs List

1: movement assisting device (walker); 2: transport trolley; 3: holding section; 3a: handle; 4: cover member; 10: transport main body; 11: frame; 12: front wheel (wheel); 13: rear wheel (wheel); 20: tipping over prevention device (inclination restricting device); 30: stopper member; 31: shaft member; 32: elongated hole; 33: assisting wheel; 34: pillar; 35: engaging protrusion; 40: support mechanism; 41: support main body; 42: coil spring (elastic member); 50: bracket; 51: engaging recess; 52: assisting engaging recess; 53: rotation restricting section; Ns: slide mechanism; Nk: lock mechanism; M1: user; Bs: obstacle; Sa: angle range; L1: first distance; L2: second distance; Ls: shift distance

## Claims

1. A transport trolley (2) comprising:
a traveling trolley main body (10) provided with multiple wheels (12,13);
a stopper member (30) that restricts inclination of the trolley main body by
contacting a floor surface in a case in which the trolley main body is inclined to the side in the travel direction, the stopper member being provided at either a side to the front or a side to the rear of the wheels in the travel direction so as to be rotatable with respect to the trolley main body around a rotation axis line that is horizontal; **characterised by**:
an elastic member (42) that applies elastic force such that the stopper member returns to an initial angle,
and wherein
the stopper member, when contacting an obstacle from the front side or the rear side in the travel direction, rotates around the rotation axis line against elastic force due to the load in the travel direction received from the obstacle so as to avoid the obstacle.

2. The transport trolley according to claim 1, further comprising:
a slide mechanism (Ns) that supports the stopper member so as to be rotatable
around the rotation axis line and relatively movable in a vertical direction with respect to the trolley main body; and
a lock mechanism (Nk) that, when the stopper member contacts the floor surface due to the trolley main body inclining, engages in the rotation direction with the stopper member that moved up relative to the trolley main body due to the load in the up direction received from the floor surface, thereby restricting the rotation of the stopper member.

3. The transport trolley according to claim 1 or claim 2, further comprising:
a rotation restricting section (53), provided on the trolley main body, that restricts the angle range in which the stopper member is able to move by contacting in the rotation direction the stopper member that has rotated around the rotation axis line to a specified angle.

4. The travel trolley according to any one of the claims 1 to 3, wherein
the stopper member includes an assist wheel (33) that contacts the floor surface when the trolley main body is inclined.

5. The travel trolley according to any one of the claims 1 to 4, wherein
the stopper member contacts the floor surface further towards the side in the travel direction than the rotation axis when the trolley main body is inclined.

6. The travel trolley according to any one of the claims 1 to 5, further comprising:
multiple inclination restriction devices (20) configured from the stopper member and the elastic member,
wherein
the multiple inclination restriction devices are arranged further to the front in the travel direction than the front wheels of the multiple wheels, and further to the rear in the travel direction than the rear wheels of the multiple wheels.

7. A walker (1) comprising:
the transport trolley (2) according to any one of the claims 1 to 6, and
a holding section (3), provided on the trolley main body, that is used by a standing user for maintaining posture.

## Patentansprüche

1. Transportwagen (2), der umfasst:
einen fahrenden Wagen-Hauptkörper (10), der mit mehreren Rädern (12, 13) versehen ist;
ein Anschlag-Element (30), das Neigung des Wagen-Hauptkörpers einschränkt, indem es mit einer Bodenfläche in Kontakt kommt, wenn der Wagen-Hauptkörper zur Seite in der Fahrtrichtung geneigt wird, wobei das Anschlag-Element entweder an einer Seite vor den Rädern oder einer Seite hinter den Rädern in der Fahrtrichtung so angeordnet ist, dass es in Bezug auf den Wagen-Hauptkörper um eine Drehachsen-Linie herum gedreht werden kann, die horizontal ist; **gekennzeichnet durch**:
ein Feder-Element (42), das Federkraft so ausübt, dass das Anschlag-Element in einen Ausgangs-Winkel zurückkehrt,
und wobei
das Anschlag-Element, wenn es mit einem Hindernis von der vorderen Seite oder der hinteren Seite in der Fahrtrichtung in Kontakt kommt, sich aufgrund der von dem Hindernis empfangenen Last in der Fahrtrichtung gegen die Federkraft um die Drehachsen-Linie herumdreht und so das Hindernis umgeht.

2. Transportwagen nach Anspruch 1, der des Weiteren umfasst:
einen Gleit-Mechanismus (Ns), der das Anschlag-Element so trägt, dass es um die Drehachsen-Linie herum gedreht werden kann und relativ in Bezug auf den Wagen-Hauptkörper in einer vertikalen Richtung bewegt werden kann; sowie
einen Arretier-Mechanismus (Nk), der, wenn das Anschlag-Element aufgrund von Neigung des Wagen-Hauptkörpers mit der Bodenfläche in Kontakt kommt, in der Drehrichtung mit dem Anschlagelement in Eingriff kommt, das sich aufgrund der von der Bodenfläche in der Aufwärtsrichtung empfangenen Last relativ zu dem Wagen-Hauptkörper nach oben bewegt hat, und so die Drehung des Anschlag-Elementes einschränkt.

3. Transportwagen nach Anspruch 1 oder Anspruch 2, der des Weiteren umfasst:
einen Teilabschnitt (53) zum Einschränken von Drehung, der sich an dem Wagen-Hauptkörper befindet und den Winkelbereich einschränkt, in dem sich das Anschlag-Element bewegen kann, indem er in der Drehrichtung mit dem Anschlag-Element in Kontakt kommt, das sich bis zu einem vorgegebenen Winkel um die Drehachsen-Linie herumgedreht hat.

4. Transportwagen nach einem der Ansprüche 1 bis 3, wobei
das Anschlag-Element ein Hilfsrad (33) enthält, das mit der Bodenfläche in Kontakt kommt, wenn der Wagen-Hauptkörper geneigt wird.

5. Transportwagen nach einem der Ansprüche 1 bis 4, wobei
das Anschlag-Element mit der Bodenfläche weiter zu der Seite in der Fahrtrichtung als bis zu der Drehachse in Kontakt kommt, wenn der Wagen-Hauptkörper geneigt wird.

6. Transportwagen nach einem der Ansprüche 1 bis 5, der des Weiteren umfasst:
mehrere Vorrichtungen (20) zur Einschränkung von Neigung, die durch das Anschlag-Element und das Feder-Element gebildet werden,
wobei
die mehreren Vorrichtungen (20) zur Einschränkung von Neigung weiter vorn in der Fahrtrichtung als die vorderen Räder der mehreren Räder und weiter hinten in der Fahrtrichtung angeordnet sind als die hinteren Räder der mehreren Räder.

7. Gehhilfe (1), die umfasst:
den Transportwagen (2) nach einem der Ansprüche 1 bis 6 sowie
einen Halte-Teilabschnitt (3), der sich an dem Wagen-Hauptkörper befindet und von einem stehenden Benutzer verwendet wird, um seine Haltung beizubehalten.

## Revendications

1. Chariot de transport (2) comprenant :
un corps principal de chariot (10) pourvu de multiples roues (12, 13) ;
un élément de butée (30) qui restreint l'inclinaison du corps principal du chariot en entrant en contact avec la surface du sol dans le cas où le corps principal du chariot est incliné vers le côté dans la direction de déplacement, l'élément de butée étant pourvu soit du côté avant, soit du côté arrière des roues en direction de déplacement de manière à pourvoir tourner par rapport au corps principal du chariot autour d'une ligne d'axe de rotation qui est horizontale ;
**caractérisé par** :
un élément élastique (42) qui applique une force élastique de telle sorte que l'élément de butée revient à un angle initial, et dans lequel l'élément de butée, lorsqu'il entre en contact avec un obstacle du côté avant ou du côté arrière en direction de déplacement, tourne autour de la ligne d'axe de rotation contre la force élastique du fait de la charge exercée par l'obstacle en direction de déplacement, de manière à éviter l'obstacle.

2. Chariot de transport selon la revendication 1, comprenant en outre :
un mécanisme coulissant (Ns) qui supporte l'élément de butée de manière à pouvoir tourner autour de la ligne d'axe de rotation et mobile de manière relative en direction verticale par rapport au corps principal du chariot ; et
un mécanisme de verrouillage (Nk) qui, quand l'élément de butée entre en contact avec la surface du sol du fait de l'inclinaison du corps principal du chariot, s'engage en direction de rotation avec l'élément de butée qui s'est déplacé vers le haut par rapport au corps principal du chariot du fait de la charge exercée de bas en haut par la surface du sol, ce qui restreint la rotation de l'élément de butée.

3. Chariot de transport selon la revendication 1 ou 2, comprenant en outre :
une section de restriction de rotation (53) pourvue sur le corps principal du chariot, qui restreint la plage angulaire de déplacement de l'élément de butée en entrant en contact en direction de rotation avec l'élément de butée qui a tourné autour de la ligne d'axe de rotation jusqu'à un angle spécifié.

4. Chariot selon l'une quelconque des revendications 1 à 3, dans lequel
l'élément de butée comprend une roue auxiliaire (33) qui entre en contact avec la surface du sol quand le corps principal du chariot est incliné.

5. Chariot selon l'une quelconque des revendications 1 à 4, dans lequel
l'élément de butée entre plus en contact avec la surface du sol vers le côté en direction de déplacement que l'axe de rotation quand le corps principal du chariot est incliné.

6. Chariot selon l'une quelconque des revendications 1 à 5, comprenant en outre :
des dispositifs de restriction d'inclinaison multiples (20) configurés à partir de l'élément de butée et de l'élément élastique,
dans lequel les dispositifs de restriction d'inclinaison multiples sont agencés plus vers l'avant en direction de déplacement que les roues avant des roues multiples, et plus vers l'arrière en direction de déplacement que les roues arrière des roues multiples.

7. Déambulateur (1) comprenant :
le chariot de transport (2) selon l'une quelconque des revendications 1 à 6, et
une section de maintien (3) pourvue sur le corps principal du chariot, utilisée par un utilisateur debout pour maintenir sa posture.
